# EUROPEAN PATENT APPLICATION

(11) **EP 2 666 755 A1**
(43) Date of publication of application: **27.11.2013**
(21) Application number: 12169460.8
(22) Date of filing: 25.05.2012
(51) Int. Cl.: C02F 1/44

(54) **Water treatment method comprising addition of surfactant before reverse osmosis filtration**

(71) Applicant: Kemira Oyj, 00180 Helsinki (FI)
(72) Inventor: Kiljunen, Samantha, FI-53500 Lappeenranta (FI); Hesampour, Mehrdad, FI-02660 Espoo (FI); Caceller, Rosa, FI-02160 Espoo (FI); Abinet, Roderick, Scottsdale, AZ 85262 (US)
(74) Representative: Hakkila, Maini Annika

(57) **Abstract**

The invention relates to the use of membranes in applications of water treatment, and especially to the modification of the membranes and/or the surface tension of the aqueous phase of the water during membrane filtration. The invention discloses a water treatment process comprising at least one membrane filtration step, wherein water is contacted with a reverse osmosis membrane. During the water treatment process a surfactant is added to the water before it is contacted with the reverse osmosis membrane, and the surfactant is added to the water in an amount to provide surfactant:water concentrations which are below critical micelle concentration.

## Description

### FIELD OF THE INVENTION

The present invention is in the field of membrane filtration. The invention relates to the use of membranes in applications of water treatment, and especially to the modification of the membranes and/or the surface tension of the aqueous phase of the water during membrane filtration which includes at least one reverse osmosis step.

### BACKGROUND OF THE INVENTION

It is generally known that liquids and especially water can be cleaned by various separation methods using filtration units. Such separation methods include for instance micro-filtration (MF), ultra-filtration (UF), nano-filtration (NF) and reverse osmosis (RO). Microfiltration membranes are typically polymer or metal membrane discs or pleated cartridge filters rated in the 0.1 to 2 µm range that operate in the 0.05 to 2 bar pressure range. Ultrafiltration is a crossflow process that rejects contaminants (including organics, bacteria, and pyrogens) in the 10 ångstrom to 0.1 µm range using operating pressure in the 0.5 to 10 bar range. Nanofiltration equipment removes organic compounds in the 200 to 1,000 molecular weight range, rejecting selected salts. Reverse osmosis removes virtually all organic compounds and 90% to 99% of all ions under pressure in the 2 to 80 bar range. The function of the separation units might be to substantially remove substances present in a liquid media, so that the obtained cleaned liquid media can be reused or disposed of in an environmentally acceptable manner.

The wide spread use of membranes in applications of water treatment is severely stunted by the high energy costs to operate these processes. While membranes offer a reduced carbon foot print and therefore greener solution the high energy costs need to be addressed.

It known that the use of modified filtration membranes may reduce the rate of fouling and therefore the flux will be maintained for longer periods, which in turn reduces the cleaning frequency and damage to the membranes. WO 2005/123157 discloses a method of activating membranes useful in separation processes, wherein the membrane is contacted for at least one day with a liquid activating agent comprising at least one acid and at least one surfactant. The method disclosed produces activated membranes in a separate process, and produced membranes can then be placed in to a filtration unit and used in a separation process.

In the above described process the membranes to be cleaned have to be removed from the filter systems, cleaned and reactivated. During the reactivation process the period of time in which the membranes are contacted with said liquid activating composition is very long. Therefore there is a need for spare membranes or otherwise the standstill of the filter system during reactivation and cleaning is too long and involves further costs. Further, the possibilities to modify, control and adjust the filtration process are limited when the membranes are activated offline.

Accordingly the problem dealt with in the present invention is to provide a method of membrane filtration useful in separation processes, whereby the energy consumption and/or the drop of performance per time of the membrane when used is reduced.

### BRIEF DESCRIPTION OF THE DRAWINGS

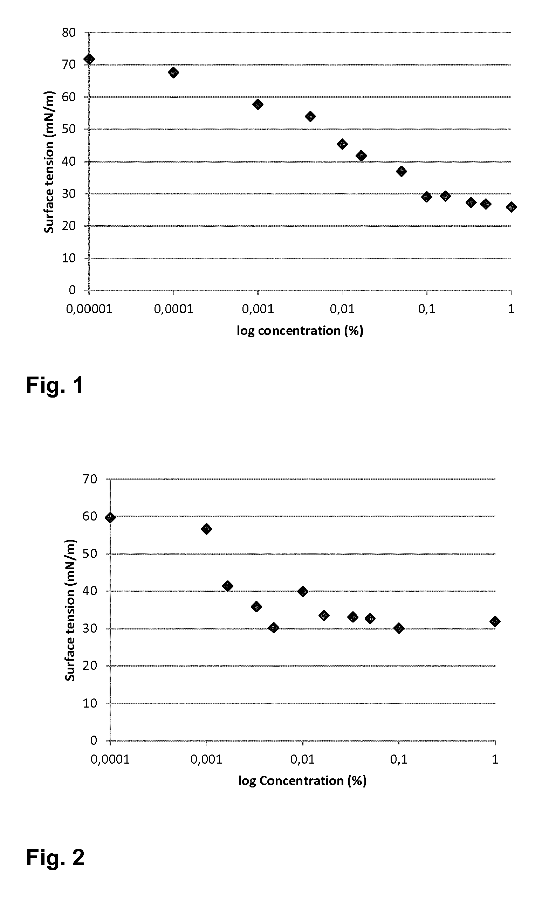

In the following the invention will be described in greater detail by means of preferred embodiments with reference to the attached drawings, in which
Figure 1 illustrates critical micelle concentration (CMC) determined for sodium dioctylsulfosuccinate. Measured surface tensions are plotted against concentration, wherefrom the inflection point denoting the critical micelle concentration of the surfactant were found by using linear regression analysis.
Figure 2 illustrates critical micelle concentration (CMC) determined for alkylbenzenesulphonic acid 4-C10-13-sec alkyl derivs. Measured surface tensions are plotted against concentration, wherefrom the inflection point denoting the critical micelle concentration of the surfactant were found by using linear regression analysis.

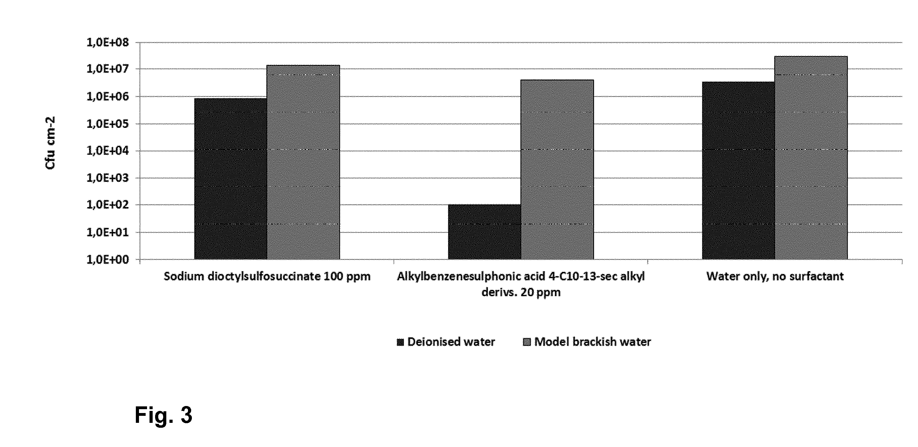

Figure 3 is a diagram showing the reduced bacteria attachment when the surface tension of the aqueous phase is adjusted to similar level as the surface energy of the membrane.

### DESCRIPTION OF THE INVENTION

Water treatment processes comprise typically several steps, wherefrom typically at least one is a separation step. The term "separation step" means the separation of substances for example from water or other solvents. Separation could be done in many ways, but the present invention relates to separation processes utilizing at least one filtration unit. All of these filtration units have in common that membranes are used.

The function of such filtration units is, in the first place, to remove mineral, organic or microbiological impurities. The liquid media such as water is filtered according to the requirements. The industrial filtration units are normally in operation for several days, weeks or even months before being cleaned or overhauled. Depending on the type of filtration unit and the nature of the aqueous medium to be filtered, the performance of the filtration units deteriorate with time.

As the operation of the filtration unit continues, blockages can occur to the point where the filtration unit is brought to a stand still. The reduction in the performance of the filtration units can be due to several reasons. For example, in the water treatment field experts are often speaking of the formation of bio-films in membranes units, so called bio-fouling. The formation of bio-films is caused by the bacterial adhesion, but also organic adhesion can have a considerable effect on membrane fouling and membrane life. Many membranes in UF/MF and especially RO applications are hydrophobic in nature and therefore easily fouled by bacterial and organic material.

When biofilm is present on the membrane due to microbial growth, colloidal solids and insoluble precipitates can adhere to the sticky substance. As this combination builds, the reduction in the performance of the filtration units can be reflected, for example, in the fact that the differential pressure between the inflow and outflow side of the filtration unit is increased. Thus, the water transmission rates ("flux") through the membrane are reduced and/or additional pressure must be applied to maintain the same flux, which leads to heavier utilization of the pumps that produce the pressure, and thus, higher energy costs as well.

Membrane fouling does not only lead to down time in the process due to the need of cleaning of the membranes, but also reduces the membrane life. If the pressure on the inflow side is increased then the materials used in the filtration unit are subjected to greater mechanical stress and, thus, accelerated wear. On the other hand, if the pressure is not increased then the desired fluxes can be maintained for a shorter period before there is a need to clean the membrane with the effect that membranes are again subjected to greater mechanical stress due the faster cleaning frequency and, thus, an accelerated wear.

It is thus an object of the present invention to provide a method so as to alleviate the above disadvantages. The objects of the invention are achieved by a method which is characterized by what is stated in the independent claim. The preferred embodiments of the invention are disclosed in the dependent claims.

The proposed invention is the utilization of chemicals to reduce energy consumption by on-line modification of the membranes to render them more hydrophilic and negatively charged. The modification of membranes will considerably reduce the rate of fouling and therefore the flux will be maintained for much longer periods without the use of higher pressure. In addition to reduced energy, the modified, more hydrophilic, membranes are less susceptible to attachment of bacteria and thus the cleaning frequency may be reduced. This leads to longer performance time of the membrane when used. Thus an object of the present invention is to provide a process, wherein the membranes have an improved performance compared with untreated membranes. Additionally the process time of the membranes should be increased so that the membranes can be used for a longer period of time without having to be replaced.

The present invention provides a water treatment process comprising at least one membrane filtration step, wherein water is contacted with a reverse osmosis membrane. During said water treatment process a surfactant is added to the water before it is contacted with the reverse osmosis membrane, and the surfactant is added to the water in an amount to provide surfactan:twater concentrations which are below critical micelle concentration (CMC).

The CMC is the concentration of surfactants in the bulk at which micelles start forming. The critical micelle concentration (CMC) is defined as the concentration of surfactants above which micelles form and almost all additional surfactants added to the system go to micelles. Before reaching the CMC, the surface tension changes strongly with the concentration of the surfactant. After reaching the CMC, the surface tension remains relatively constant or changes with a lower slope. The value of the CMC for a given dispersant in a given medium depends on temperature, pressure, and on the presence and concentration of other surface active substances and electrolytes.

Suitable surfactants that may be utilized in the present invention are selected from a group consisting of nonionic surfactants, anionic surfactants, amphoteric surfactants and mixtures thereof. Possible anionic surfactant may be selected from a group consisting of alkyl sulfates, alkyl sulfonates, alkylether sulfates, alkylether sulfonates, alkyl aryl sulfates, alkyl aryl sulfonates, aryl sulfates, aryl sulfonates, sulfated fatty acid esters or mixtures thereof.

Some examples of suitable surfactants that may be utilized in the present invention are as follows:1) Anionic surfactants including: ethoxylated amines, ethoxylated amides, sulfosuccinates, ethoxylated alcohol sulfates, alkyl ether phosphonates, alkyl ether carboxylic acids and salts, alkyl ether sulphates, alkyl phosphates, fatty alcohol sulphates and polymeric surfactants; 2) Nonionic surfactants including: alkanolamides, amine oxides, block polymers, ethoxylated primary and secondary alcohols, ethoxylated alkylphenols, ethoxylated fatty esters, glycerol esters, amine and amide derivatives and polymeric surfactants; 3) Amphoteric surfactants including: amido betaines and alkyl betaines. They can be dosed individually or together in a mixture. Mixture of surfactants especially anionic and nonionic can significantly effect on the critical micelle concentration and therefore reduce the concentration needed in dosing.

When nonionic surfactant is used it is advantageous that it possess a HLB value of 12-18 but preferably value of 13-16. The "HLB-value" defines the hydrophilic-lipophilic balance of a surfactant by a measure of the degree to which it is hydrophilic or lipophilic, determined by calculating values for the different regions of the molecule. The HLB value as used herein is the mass ratio of the hydrophilic groups to lipophilic groups. Additionally, in order for bacteria and organics to attach to the membrane surface they first need to displace water from the membrane surface. If the surface tension of the aqueous phase is similar to the surface energy of the membrane then this is more challenging. Therefore, preferred surfactants are such that change the surface tension of the aqueous phase similar to surface energies of the membranes; for example in the range of 25-45 mN/m, preferably 40-45 mN/m. Typically, membranes utilized have surface energies in the range of 30-45. Few examples of possible membranes utilized in the method and their individual surface energies are: PVDF 30.3 mN/m, PET 44.6 mN/m, Polyamide 40.7 mN/m, PEEK 42.1 mN/m, PAN 44 mN/m and Polysulfone 41 mN/m.

In the present invention the molecular weight of the surfactant or polymer is not as important as the molecular weight of the hydrophobic portion of the molecule. If the percentage of the hydrophobic portion is too low there will not be effective adsorption to the membrane. HLB is only calculated for nonionic surfactants and therefore for anionic and amphoteric surfactants the recommendation is for every charge on the hydrophilic part there should be >12 carbon atoms on the hydrophobic part. Van der Waals energy per CH₂ is about 2.5 kJ/mol and therefore when the hydrophobic part consists of at least 12 carbons the Van der Waals energy is about 30 kJ/mol which exceeds the electrostatic repulsion energy of one charge group on the hydrophilic part.

In an embodiment of the present invention the surfactants are combined with antiscalants and dosed simultaneously to control both inorganic and organic membrane fouling. Some classes of antiscalant can perform as also the membrane modifier and therefore play a duel role of membrane modification, biofouling reduction and inorganic fouling control. Possible antiscalants include the following: polycarboxylic acid/salts derivatives, polymaleic acid derivatives and copolymers of these, poly(maleic acid and vinyl-sulfonate) copolymers, poly(acrylamidomethyl propanesulfonic acid and (meth)acrylic acid) copolymer derivatives, and phosphonates derivatives.

The coverage of the surfactant on the membrane is important. If it is too low there will not be sufficient hydrophobic sites modified and therefore the membrane will still be subject to fouling and flux enhancement and retention will not be sufficient. On the other hand, if the modification is too dense then this will effect on the transport mechanism and decrease the flux rate. The extent of coverage is dependent on surfactant type, modification contact time, frequency of modification and surfactant concentration.

In the present invention the surfactant is added during the water treatment process to the water in an amount to provide surfactant:water concentrations which are below critical micelle concentration (CMC). Typically the addition is in an amount to provide a surfactant:water concentration of 1-1000 ppm, preferably 1-300 ppm, or more preferably 1-100 ppm. However, the upper and lower limits of this range may vary. In some embodiments of the present invention the upper limit of the surfactant:water concentration is 500 ppm, 300 ppm, or 100 ppm; and the lower limit of the surfactant:water concentration is 5 ppm, 10 ppm, or 20 ppm. The concentration below CMC is used because then surfactant attaches more readily to the membrane. Above and at the CMC the surfactants prefer to stay in the micelle formation. In an embodiment of the present invention the surfactant is added to the water in an amount to provide surface tension of the aqueous phase in the range of 25-45 mN/m, preferably 40-45 mN/m.

The amount of added surfactant is also dependent on the dosing time. It is possible to have continuous dosing, in which a low level of a surfactant is maintained within the system all the time. It is also possible to use periodic dosing, in which the surfactant is added to the water intermittently during processing. In such cases the dosing period may be for example 30 min to 4 hours. The reason for the short dosing time is to avoid over modification of the membrane by surfactant, which will have an undesired effect of flux reduction.

When using periodic dosing, the addition of surfactant may be paused for a period of 2 hours to 3 weeks, while continuing the water treatment process. One must understand that in both continuous and periodic dosing, at some point the filtration system must be shut down so that the membrane can be cleaned or replaced.

As contaminants build up on a membrane system, the system performance will deteriorate. For example, the filtration system may require an increased pressure differential to produce the same flux as the system in its ("clean") steady state. Stated otherwise, for the same level of pressure differential, the flux rate of the system will decrease. For these purposes, the term "pressure differential" refers to the difference in pressure between the feed stream and the permeate stream, and "flux" refers to the flow rate of the permeate stream. Typically in reverse osmosis membrane filtration the feed pressure is from 2 to 30 bars.

In the present invention the duration of the pause period, i.e. the time when the addition of the surfactant is paused, may be adjusted by measuring the flux through the membrane and/or the retention of the membrane, and comparing these flux and/or retention values to normalised flux and/or retention values of the process. The normalized flux and/or retention values are those which are achieved when the process in running in a steady state. It is an advantage of the present process that it is not necessary to stop the process each time the flux rate of the system decreases below wanted level, but one can start the feed of the surfactant again and continue the water treatment process without a break.

In an embodiment of the present invention the surfactant dosing is reapplied when the normalized flux drops between 2-5 % or otherwise the membrane may foul. In addition, if the retention decreases by 1-2 % then again this indicates that the surfactant dosing should be reapplied. For monitoring the efficiency of dosing and control the frequency of dosing, preferably both permeate flux and rejection is monitored. If the process is automatized then a monitoring device may give a feed back to dosing pump when there are changes in the normalized flux and rejection are for example ±3%. If surfactant is used as a surface tension modifier, then surface tension changes may be monitored and linked to dosing pump.

For each cycle between periodic cleanings, the flux will gradually deteriorate over time as biofilm and other contaminants build up on the membrane system. Another problem is that the periodic cleaning will also cause decrease in the steady state flux level when compared to the previous cycle because the membrane will generally degrade due to use and, in most circumstances, especially due to the cleaning process. Thus, in addition to the fluctuations of the system flux between periodic cleanings, there will also be an observed general decline in system performance over time. It is another advantage of the present invention that the over all use time of a membrane can be increased due to the fact that fewer cleanings are required in the present invention.

In an embodiment of the present invention the water treatment process further comprises membrane cleaning step, wherein the cleaning liquid contains the same surfactant which is used online during the water treatment process.

In a typical water treatment process a number of pre-treatment processes are also available to reduce the fouling potential of the feed water being introduced to the membrane. These include various types of filtration, disinfection, and chemical treatment. In an embodiment of the present invention the water treatment process comprises other membrane filters than reverse osmosis membrane and the dosing of the surfactant is done before such another membrane. Such other membrane filters may comprise an ultra-filtration membrane, a micro-filtration membrane, or a nano-filtration membrane.

The modification utilized in the present invention is suitable for UF/MF/NF/RO and in all filter configurations including: flat sheet, spiral wound, tubular, hollow fiber and their combinations. The invention is not limited to these types of membranes and configurations. In addition different membrane materials are suitable including but not limited to the following: polyamide, polysulphone (PS), polyethersulphone (PES), regenerated cellulose (CA), polyvinyl chloride (PVC), polyvinylidene fluoride (PVDF), and Polyacrylonitrile (PAN). In an embodiment of the invention the membrane of the filter is hydrophobic.

Maintaining fluxes for longer time before need to clean the membranes may be achieved in two ways: by modification of the membrane as described above or by reduction of the surface tension of the aqueous phase. Therefore another aspect of the present invention is the use of a surfactant in a water treatment process for the modification of the surface tension of the aqueous phase of the water, wherein the process comprises at least one membrane filtration step, and wherein the water to be treated is contacted with a reverse osmosis membrane.

In order for hydrated bacteria to attach to the membrane it needs to first displace water and this is possible by making the membranes more hydrophilic by increasing membrane surface energy or by lowering the surface tension of the aqueous phase. Either way the bacteria will not be able to displace the water. The conditions for membrane modification are described above and these can be applied also for surface tension modification of the aqueous phase. However, the amount of surfactant used is typically lower and continues dosing is preferred.

For the modification of the surface tension of the aqueous phase of the water, the surfactant used is preferably an anionic surfactant, which may be selected from a group consisting of alkyl sulfates, alkyl sulfonates, alkylether sulfates, alkylether sulfonates, alkyl aryl sulfates, alkyl aryl sulfonates, aryl sulfates, aryl sulfonates, sulfated fatty acid esters or mixtures thereof.

The process of the present invention may be utilized in many types of water treatment processes including desalination, water reuse, industrial water recycling, membrane bioreactors, dairy and food processing, pharmaceutical applications and belt filter presses. The invention is not limited to these applications only.

### EXAMPLES

### Example 1

Water was pumped from a brackish water tank to a flat sheet cell having a polyamide reverse osmosis membrane. Surfactants according to Table 1 were added continuously into feed water during 3 hours. The concentration of the surfactants in the feed water was kept at 0.09 weight-%. The filtration conditions were as follows: pressure 10 or 15 bar, salt (sea salt) 2 g/l in the water, temperature: 50 °C, cross-flow velocity 1 m/s. The flux was measured after the 3 hours treatment and compared to the situation before the addition of the surfactant. The flux increase can be seen in Table 1.

**Table 1**

| Surfactant type | Pressure (bar) | Flux increase (%) |
|---|---|---|
| Fatty alcohol polyglycol ether | 10 | 24 |
| | 15 | 21 |
| Alkylphenolethoxylate + Sorbitanester polyethylene glycol ether | 10 | 28 |
| | 15 | 21 |
| Alkylethercarboxylic acid | 10 | 27 |
| | 15 | 26 |

### Example 2

Water was pumped from a brackish water tank to a flat sheet cell having a polyethersulphone UF membrane. Surfactants according to Table 2 were added continuously into feed water during 3 hours. The concentration of the surfactants in the feed water was kept at 0.09 weight-%. The filtration conditions were as follows: pressure 2 or 3 bar, temperature: 50 °C, cross-flow velocity: 1 m/s. The flux was measured after the 3 hours treatment and compared to the situation before the addition of the surfactant. The flux increase can be seen in Table 2.

**Table 2**

| Surfactant type | Pressure (bar) | Flux increase (%) |
|---|---|---|
| Alkyl amine oxide | 2 | 217 |
| | 3 | 228 |
| Alkylethercarboxylic acid | 2 | 65 |
| | 3 | 63 |

### Example 3

Critical micelle concentration (CMC) was determined for two surfactants, sodium dioctylsulfosuccinate and alkylbenzenesulphonic acid 4-C10-13-sec alkyl derivs. A series of aqueous surfactant dilutions were prepared in deionized water with concentrations between 0.00001 or 0.0001 and 1 weight-%. The water surface tension at 22 °C was measured on a KSV Sigma 70 tensiometer using the Du Nouy ring method. Measured surface tensions were plotted against concentration and linear regression analysis was used to find the inflection point denoting the critical micelle concentration of the surfactant. From Figure 1 and Figure 2 can be seen what the value of surface tension below CMC is. In on-line dosing experiments concentrations below the critical micelle concentration were used. The dosing of the surfactant alters the surface tension of the feed to about 30 mN/m which is similar to the surface energy of a polyamide membrane.

### Example 4

Filmtec BW30 membranes were immersed for 24 hours in water solution that comprised surfactant and cells: Inoculum *Pseudomonas aeroginosa* E-96726 grown in TS broth overnight. Cells were then harvested, washed with phosphate buffered saline and mixed to the water to inoculum level 10⁷ cfu ml⁻¹. After 24 hour soaking, culture based analysis (cfu) + acridine orange (AO) staining was performed for the membranes. The surfactants and their concentration in the experiment were: sodium dioctylsulfosuccinate 100 ppm and alkylbenzenesulphonic acid 4-C10-13-sec alkyl derivs. 20 ppm. It is difficult for water to be displaced by bacteria when the energies of membrane and feed are similar. Therefore the adjustment in energies reduces bacteria attachment which is seen in Figure 3.

### Example 5

Polyamide membrane was soaked for 48 h into the deionized water containing 100 ppm of sodium sulfosuccinate. In another trial the surfactant solution was made to contain also 0.3 weight-% of potassium hydroxide. After the soaking period the membranes were installed in the flat sheet cell unit and tested for water capacity. There is an even larger increase in flux after dosing KOH and it is considered that this is owing to improved orientation of the surfactant molecules towards the membrane. The addition of KOH will increase electrostatic repulsion between the membrane and anionic charge on the surfactant owing to the membranes being more negatively charged. Therefore, the modification is more pronounced. The flux increase can be seen in Table 3.

**Table 3 Flux data after soaking in a surfactant with and without pH adjustment**

| Dosing of surfactant (ppm) | KOH (%) | Deionized water flux (LMH) before soaking | Deionized water flux (LMH) after soaking |
|---|---|---|---|
| 100 | 0 | 40.6 | 45(11 %) |
| 100 | 0.3 | 40.6 | 51 (26 %) |

## Claims

1. A water treatment process comprising at least one membrane filtration step, wherein water is contacted with a reverse osmosis membrane, **characterized in that** during the water treatment process a surfactant is added to the water before it is contacted with the reverse osmosis membrane, and the surfactant is added to the water in an amount to provide surfactant:water concentrations which are below critical micelle concentration.

2. A water treatment process according to claim 1, wherein the surfactant is added to the water in an amount to provide a surfactant:water concentration of 1-1000 ppm, preferably 1-300 ppm, or more preferably 1-100 ppm.

3. A water treatment process according to claim 1, wherein the surfactant is added to the water in an amount to provide surface tension of the aqueous phase in the range of 25-45 mN/m, preferably 40-45 mN/m.

4. A water treatment process according to claim 1, wherein reverse osmosis membrane filtration is operated at pressures of 2 to 30 bars.

5. A water treatment process according to claim 1, wherein the surfactant is added to the water intermittently during processing for a dosing period of 30 min to 4 hours.

6. A water treatment process according to claim 5, wherein the addition of surfactant is paused for a period of 2 hours to 3 weeks.

7. A water treatment process according to claim 6, wherein the duration of the pause period is adjusted by measuring the flux through the membrane and/or the retention of the membrane, and comparing these flux and/or retention values to normalised flux and/or retention values of the process.

8. A water treatment process according to claim 1, wherein the surfactant is added to the water continuously.

9. A water treatment process according to claim 1, wherein the surfactant is selected from a group consisting of nonionic surfactants, anionic surfactants, amphoteric surfactants and mixtures thereof.

10. A water treatment process according to claim 9, wherein the anionic surfactant is selected from a group consisting of alkyl sulfates, alkyl sulfonates, alkylether sulfates, alkylether sulfonates, alkyl aryl sulfates, alkyl aryl sulfonates, aryl sulfates, aryl sulfonates, sulfated fatty acid esters or mixtures thereof.

11. A water treatment process according to claim 1 comprising other membrane filters than reverse osmosis membrane and the dosing of the surfactant is done before such another membrane, and wherein such other membrane filters may comprise an ultra-filtration membrane, a micro-filtration membrane, or a nano-filtration membrane.

12. A water treatment process according to claim 1, wherein the membrane of the filter is hydrophobic.

13. A water treatment process according to claim 1, wherein the membrane material is selected from a group consisting of polyamide (PA), polysulphone (PS), regenerated cellulose (CA), polyvinyl chloride (PVC), polyvinylidene fluoride (PVDF), and polyacrylonitrile (PAN).

14. A water treatment process according to claim 1, wherein the process further comprises membrane cleaning step, wherein the cleaning liquid contains the same surfactant which is used online during the water treatment process

15. Use of a surfactant in a water treatment process for the modification of the surface tension of the aqueous phase of the water, wherein the process comprises at least one membrane filtration step, and wherein the water to be treated is contacted with a reverse osmosis membrane.

16. Use according to claim 15, wherein the surfactant is the anionic and it is selected from a group consisting of alkyl sulfates, alkyl sulfonates, alkylether sulfates, alkylether sulfonates, alkyl aryl sulfates, alkyl aryl sulfonates, aryl sulfates, aryl sulfonates, sulfated fatty acid esters or mixtures thereof.
